# EUROPEAN PATENT APPLICATION

(11) **EP 4 415 282 A1**
(43) Date of publication of application: **14.08.2024**
(21) Application number: 22885598.7
(22) Date of filing: 30.09.2022
(51) Int. Cl.: H04B 7/185

(54) **SATELLITE COMMUNICATION METHOD AND SATELLITE COMMUNICATION DEVICE**

(30) Priority: 29.10.2021 CN 202111276264
(71) Applicant: Huawei Technologies Co., Ltd., Shenzhen, Guangdong 518129 (CN)
(72) Inventor: WANG, Yu, Shenzhen, Guangdong 518129 (CN); LUO, Hejia, Shenzhen, Guangdong 518129 (CN); QIAO, Yunfei, Shenzhen, Guangdong 518129 (CN); CHEN, Ying, Shenzhen, Guangdong 518129 (CN); YANG, Ruonan, Shenzhen, Guangdong 518129 (CN)
(74) Representative: Maiwald GmbH
(86) International application number: PCT/CN2022/123573
(87) International publication number: WO 2023/071716

(57) **Abstract**

This application provides a satellite communication method and a satellite communication apparatus, to help reduce signaling overheads in a communication process. The method includes: A first satellite obtains a parameter for determining an elevation angle for a departure service of the first satellite in a first serving cell. The first satellite sends first indication information to a terminal device, where the first indication information indicates the elevation angle for the departure service of the first satellite in the first serving cell in which the terminal device is located. The terminal device determines an elevation angle of the terminal device relative to the first satellite based on an ephemeris and location information of the terminal device. The terminal device determines departure service information based on the first indication information, and compares the elevation angle for the departure service with the elevation angle of the terminal device relative to the first satellite, to determine whether to perform satellite reselection or handover.

## Description

This application claims priority to Chinese Patent Application No. 202111276264.6, filed with the China National Intellectual Property Administration on October 29, 2021 and entitled "SATELLITE COMMUNICATION METHOD AND SATELLITE COMMUNICATION APPARATUS", which is incorporated herein by reference in its entirety.

### TECHNICAL FIELD

This application relates to the field of satellite communication, and more specifically, to a satellite communication method and a satellite communication apparatus.

### BACKGROUND

A non-terrestrial communication network (non-terrestrial network, NTN) includes satellite networks, high-altitude platforms, uncrewed aerial vehicles, and other nodes, and has prominent advantages of global coverage, long-distance transmission, flexible networking, convenient deployment, being not limited by geographical conditions, and the like. Usually, a single satellite has a very wide coverage area, and the coverage area may reach thousands or even tens of thousands of square kilometers. A single beam has a minimum coverage area of dozens or even thousands of meters. Therefore, to support wide-area coverage, hundreds or even thousands of beams usually need to be configured for the single satellite. This brings a great challenge to a payload of the satellite. To alleviate a contradiction between a small payload and the wide coverage area of the single satellite, a beam hopping satellite communication system emerges. Specifically, in the beam hopping satellite system, only a few beams (for example, dozens of beams) are configured for the single satellite, and the beams serve all coverage areas of the single satellite in a time division manner.

Usually, a satellite may serve a plurality of terminal devices in a coverage area. As the satellite moves, the coverage area of the satellite may change accordingly. Further, the satellite may fail to continue to provide a communication service for the plurality of terminal devices in the original coverage area. In a moving process, the satellite needs to monitor location information of the plurality of terminal devices in real time, determine a timer parameter or a reference point location parameter of each terminal device based on location information of the terminal device, and send the timer parameter or the reference point location parameter to the terminal device. Because all the terminal devices have different location information, the terminal devices have different timer parameters. After a timer expires, the terminal device may perform satellite reselection or handover.

However, in the foregoing manner of indicating, by using the timer parameter or the reference point location parameter, the terminal device to perform the satellite reselection or handover, because each terminal device has a different timer parameter or reference point location parameter, the satellite needs to send a corresponding timer parameter or reference point location parameter to each terminal device. This causes excessive signaling overheads.

### SUMMARY

This application provides a satellite communication method and a satellite communication apparatus, to help reduce signaling overheads in a communication process.

According to a first aspect, a satellite communication method is provided, including: A terminal device receives first indication information from a first satellite, where the first indication information indicates a parameter for determining an elevation angle for a departure service of the first satellite in a first serving cell in which the terminal device is located. The terminal device determines an elevation angle of the terminal device relative to the first satellite based on an ephemeris and location information of the terminal device. The terminal device determines the elevation angle for the departure service based on the first indication information, and compares the elevation angle for the departure service with the elevation angle of the terminal device relative to the first satellite, to determine whether to perform satellite reselection or handover.

In this application, the terminal device may determine, based on the elevation angle for the departure service indicated by the first satellite, whether to perform the satellite reselection or handover. There is at least one terminal device in the first serving cell, and the first indication information is used for all terminal devices in the first serving cell. In this way, the first satellite does not need to separately send a timer parameter to each terminal device in the first serving cell to indicate the terminal device to perform the satellite reselection or handover, so as to help reduce signaling overheads.

With reference to the first aspect, in some implementations of the first aspect, that the terminal device compares the elevation angle for the departure service with the elevation angle of the terminal device relative to the first satellite, to determine whether to perform satellite reselection or handover includes: When the elevation angle of the terminal device relative to the first satellite is less than or equal to the elevation angle for the departure service, the terminal device determines to perform the satellite reselection or handover.

In this application, the terminal device may determine, by comparing the elevation angle of the terminal device relative to the first satellite with a size of the elevation angle for the departure service, whether to perform the satellite handover. This is easy to implement, and helps the terminal device hand over in a time to improve communication quality.

With reference to the first aspect, in some implementations of the first aspect, the first indication information is carried in any one of the following information: a system information block (system information block, SIB), a media access control control element (media access control control element, MAC CE), downlink control information (downlink control information, DCI), or radio resource control (radio resource control, RRC).

With reference to the first aspect, in some implementations of the first aspect, the parameter for determining the elevation angle for the departure service of the first satellite in the first serving cell in which the terminal device is located includes at least one of the following: the elevation angle for the departure service, an opening angle, or a central angle of the first satellite.

According to a second aspect, a satellite communication method is provided, including: A first satellite obtains a parameter for determining an elevation angle for a departure service of the first satellite in a first serving cell in which a terminal device is located. The first satellite sends first indication information to the terminal device in the first serving cell, where the first indication information indicates the parameter for determining the elevation angle for the departure service.

With reference to the second aspect, in some implementations of the second aspect, the first indication information is carried in any one of the following information: a SIB, a MAC CE, DCI, or RRC.

With reference to the second aspect, in some implementations of the second aspect, the parameter for determining the elevation angle for the departure service of the first satellite in the first serving cell in which the terminal device is located includes at least one of the following: the elevation angle for the departure service, an opening angle, or a central angle of the first satellite.

In this application, the first satellite may directly indicate the elevation angle for the departure service to the terminal device. In addition, the first satellite may further indicate, by using the first indication information, the opening angle and/or the central angle of the satellite that determines the elevation angle for the departure service. The elevation angle for the departure service of the first satellite may be obtained by using the opening angle and/or the central angle of the first satellite.

With reference to the second aspect, in some implementations of the second aspect, the first satellite determines an elevation angle for an arrival service and/or the elevation angle for the departure service of the first satellite in the first serving cell. The first satellite adjusts the elevation angle for the arrival service and/or the elevation angle for the departure service based on a traffic density degree of the first serving cell. The first satellite sends second indication information to a second satellite, where the second indication information indicates an adjusted elevation angle for the arrival service and/or an adjusted elevation angle for the departure service of the first satellite, and a coverage area of the second satellite is adjacent to a coverage area of the first satellite.

In this application, to implement coordinated coverage by a plurality of satellites, the first satellite and the second satellite may interact information about the elevation angle for the arrival service and/or the elevation angle for the departure service. In this way, the first satellite and the second satellite may dynamically adjust elevation angle information of the first satellite and the second satellite, to implement seamless coverage of an area, so as to improve communication quality of a terminal device in a coordinated coverage area.

With reference to the second aspect, in some implementations of the second aspect, that the first satellite adjusts the elevation angle for the arrival service and/or the elevation angle for the departure service based on a traffic density degree of the first serving cell includes: When the traffic density degree of the first serving cell is greater than or equal to a first preset threshold, the first satellite increases the elevation angle for the arrival service and/or the elevation angle for the departure service. Alternatively, when the traffic density degree of the first serving cell is less than a first preset threshold, the first satellite decreases the elevation angle for the arrival service and/or the elevation angle for the departure service.

In this application, if traffic in the first serving cell of the first satellite is dense and exceed the first preset threshold, the first satellite may fail to bear dense traffic requirements, and cannot provide good traffic experience for the terminal device in the first serving cell. Therefore, the first satellite may reduce a service area by increasing the elevation angle for the arrival service and/or the elevation angle for the departure service. In this way, when the service area is reduced and traffic that can be borne by the first satellite remains unchanged, a throughput in per unit of service area is increased.

With reference to the second aspect, in some implementations of the second aspect, the first satellite obtains an activity factor of a first channel used by the first serving cell for traffic data transmission, where the activity factor represents average activation time of the channel in a target time period. When the activity factor of the first channel is greater than or equal to a second preset threshold, the first satellite sends the activity factor of the first channel to a third satellite, where a coverage area of the third satellite is adjacent to the coverage area of the first satellite.

In this application, the first satellite may interact an activation factor of a channel with another satellite, and interference estimation and interference management may be further performed by using the activation factor of the channel, to facilitate efficient interference management between satellites/cells.

With reference to the second aspect, in some implementations of the second aspect, the first satellite receives third indication information from the third satellite, where the third indication information indicates the first satellite to reconfigure the channel. The first satellite reconfigures the channel of the first serving cell based on the third indication information.

In this application, the third satellite may reconfigure the channel of the first serving cell based on the third indication information, to help reduce interference between the satellites.

According to a third aspect, a satellite communication method is provided, including: A second satellite receives second indication information from a first satellite, where the second indication information indicates an adjusted elevation angle for an arrival service and/or an adjusted elevation angle for a departure service of the first satellite, and a coverage area of the second satellite is adjacent to a coverage area of the first satellite. The second satellite adjusts an elevation angle for an arrival service and/or an elevation angle for a departure service of the second satellite based on the adjusted elevation angle for the arrival service and/or the adjusted elevation angle for the departure service of the first satellite.

In this application, the second satellite may adjust the elevation angle for the arrival service and/or the elevation angle for the departure service of the second satellite based on the adjusted elevation angle for the arrival service and/or the adjusted elevation angle for the departure service of the first satellite, to help implement seamless coverage of an area.

With reference to the third aspect, in some implementations of the third aspect, that the second satellite adjusts an elevation angle for an arrival service and/or an elevation angle for a departure service of the second satellite based on the adjusted elevation angle for the arrival service and/or the adjusted elevation angle for the departure service of the first satellite includes: When the adjusted elevation angle for the arrival service and/or the adjusted elevation angle for the departure service of the first satellite are/is greater than or equal to an elevation angle for the arrival service and/or an elevation angle for the departure service of the first satellite before adjustment, the second satellite decreases the elevation angle for the arrival service and/or the elevation angle for the departure service of the second satellite. Alternatively, when the adjusted elevation angle for the arrival service and/or the adjusted elevation angle for the departure service of the first satellite are/is less than or equal to an elevation angle for an arrival service and/or an elevation angle for a departure service of the first satellite before adjustment, the second satellite increases the elevation angle for the arrival service and/or the elevation angle for the departure service of the second satellite.

According to a fourth aspect, a satellite communication method is provided, including: A third satellite receives an activity factor of a first channel from a first satellite, where the first channel is a first channel used by a first serving cell covered by the first satellite for traffic data transmission. The activity factor represents average activation time of the channel in a target time period, and a coverage area of the third satellite is adjacent to a coverage area of the first satellite. The third satellite performs interference estimation based on the activity factor of the first channel and a preset interference value, to obtain an interference estimation result. The interference estimation result represents interference caused by the first serving cell to a serving cell of the third satellite in a data transmission process.

In this application, the third satellite may perform the interference estimation based on the activity factor of the channel, and such an interference estimation manner is simple and efficient.

With reference to the fourth aspect, in some implementations of the fourth aspect, when the interference estimation result is greater than or equal to a third preset threshold, the third satellite sends third indication information to the first satellite, where the third indication information indicates the first satellite to reconfigure the channel.

According to a fifth aspect, a satellite communication apparatus is provided, configured to perform the method in any possible implementation of any one of the foregoing aspects. Specifically, the apparatus includes a module configured to perform the method in any possible implementation of any one of the foregoing aspects.

In a design, the apparatus may include modules that are in one-to-one correspondence with the methods/operations/steps/actions described in the foregoing aspects. The module may be implemented by a hardware circuit, software, or a combination of a hardware circuit and software.

In another design, the apparatus is a communication chip. The communication chip may include an input circuit or an interface configured to send information or data, and an output circuit or an interface configured to receive information or data.

In another design, the apparatus is a satellite communication device. The satellite communication device may include a transmitter configured to send information or data and a receiver configured to receive information or data.

In another design, the apparatus is configured to perform the method in any one of the foregoing aspects or the possible implementations of the foregoing aspects. The apparatus may be configured in the foregoing terminal device, the first satellite, the second satellite, or the third satellite, or the apparatus is the foregoing terminal device, the first satellite, the second satellite, or the third satellite.

According to a sixth aspect, another satellite communication apparatus is provided, including a processor and a memory. The memory is configured to store a computer program, and the processor is configured to invoke the computer program from the memory and run the computer program, to enable the apparatus to perform the method in any possible implementation of any one of the foregoing aspects.

Optionally, there are one or more processors, and there are one or more memories.

Optionally, the memory may be integrated with the processor, or the memory and the processor are disposed separately.

Optionally, the apparatus is a communication device. The communication device further includes a transmitter (transmitter) and a receiver (receiver). The transmitter and the receiver may be disposed separately, or may be integrated together and are referred to as a transceiver (transceiver).

According to a seventh aspect, a processor is provided, including an input circuit, an output circuit, and a processing circuit. The processing circuit is configured to receive a signal by using the input circuit, and transmit the signal by using the output circuit, so that the processor performs the method in any possible implementation of any one of the foregoing aspects.

In a specific implementation process, the processor may be a chip, the input circuit may be an input pin, the output circuit may be an output pin, and the processing circuit may be a transistor, a gate circuit, a trigger, various logic circuits, and the like. An input signal received by the input circuit may be received and input by, for example, but not limited to, a receiver, and a signal output by the output circuit may be output to, for example, but not limited to, a transmitter and transmitted by the transmitter. The input circuit and the output circuit may be a same circuit, where the circuit is used as the input circuit and the output circuit at different moments. Specific implementations of the processor and various circuits are not limited in this application.

According to an eighth aspect, a satellite communication system is provided, including: an apparatus configured to implement the method in any one of the first aspect or the possible implementations of the first aspect and an apparatus configured to implement the method in any one of the second aspect or the possible implementations of the second aspect, or including:
an apparatus configured to implement the method in any one of the second aspect or the possible implementations of the second aspect and an apparatus configured to implement the method in any one of the third aspect or the possible implementations of the third aspect; or including:
an apparatus configured to implement the method in any one of the second aspect or the possible implementations of the second aspect and an apparatus configured to implement the method in any one of the fourth aspect or the possible implementations of the fourth aspect.

In a possible design, the communication system may further include another device that interacts with a first network device, a target second network device, and/or a wireless backhaul node in the solutions provided in this application.

According to a ninth aspect, a computer program product is provided. The computer program product includes a computer program (which may also be referred to as code or instructions). When the computer program is run, a computer is enabled to perform the method in any possible implementation of any one of the foregoing aspects.

According to a tenth aspect, a computer-readable medium is provided. The computer-readable medium stores a computer program (which may also be referred to as code or instructions). When the computer program is run on a computer, the computer is enabled to perform the method in any possible implementation of any one of the foregoing aspects.

### BRIEF DESCRIPTION OF DRAWINGS

FIG. 1 is a schematic diagram of a beam hopping satellite communication system;
FIG. 2 is a schematic diagram of an elevation angle of a satellite according to an embodiment of this application;
FIG. 3 is a schematic diagram of a satellite communication system according to an embodiment of this application;
FIG. 4 is a schematic flowchart of a satellite communication method according to an embodiment of this application;
FIG. 5 is a schematic diagram of satellite handover based on an elevation angle according to an embodiment of this application;
FIG. 6 is a schematic flowchart of another satellite communication method according to an embodiment of this application;
FIG. 7 is a schematic diagram of coordinated coverage by a plurality of satellites according to an embodiment of this application;
FIG. 8 is another schematic diagram of coordinated coverage by a plurality of satellites according to an embodiment of this application;
FIG. 9 is a schematic diagram of interference management according to an embodiment of this application;
FIG. 10 is a schematic flowchart of still another satellite communication method according to an embodiment of this application;
FIG. 11 is a schematic diagram of an intra-frequency SSB configuration of a single NR cell according to an embodiment of this application;
FIG. 12 is a schematic diagram of a UV plane according to an embodiment of this application;
FIG. 13 is a schematic diagram of a beam coverage location corresponding to TAC according to an embodiment of this application;
FIG. 14 is a schematic block diagram of a satellite communication apparatus according to an embodiment of this application;
FIG. 15 is a schematic block diagram of another satellite communication apparatus according to an embodiment of this application;
FIG. 16 is a schematic block diagram of still another satellite communication apparatus according to an embodiment of this application;
FIG. 17 is a schematic block diagram of yet another satellite communication apparatus according to an embodiment of this application; and
FIG. 18 is a schematic block diagram of still yet another satellite communication apparatus according to an embodiment of this application.

### DESCRIPTION OF EMBODIMENTS

The following describes technical solutions of this application with reference to accompanying drawings.

For ease of understanding, terms used in embodiments of this application are first briefly described.

### 1. Non-terrestrial communication network (non-terrestrial network, NTN)

The NTN includes satellite networks, high-altitude platforms, uncrewed aerial vehicles, and other nodes, and has prominent advantages of global coverage, long-distance transmission, flexible networking, convenient deployment, being not limited by geographical conditions, and the like. The NTN has been widely applied to a plurality of fields such as maritime communication, positioning and navigation, rescue and disaster relief, scientific experiments, video broadcasting, and earth observation. Aterrestrial mobile communication technology network, a satellite network, and the like are integrated, to gather strengths and overcome weaknesses, jointly form a sea-land-air-space-ground integrated communication network for global seamless coverage, and meet ubiquitous traffic requirements of a user.

As an important part of the NTN, a next generation satellite network is in a trend of ultra-dense and heterogeneous. First, a scale of the satellite network grows from 66 Iridium constellations to 720 Oneweb constellations, and finally to more than 12,000 starlink (starlink) ultra-dense low earth orbit (low earth orbit, LEO) satellite constellations. In addition, the satellite network is heterogeneous. With development from a conventional single-layer communication network to a multi-layer communication network, functions of a communication satellite network tend to be complex and diversified. The communication satellite network is gradually compatible with and supports functions such as navigation enhancement, ground observation, and multidimensional information in-orbit processing.

### 2. Beam hopping satellite communication technology

Usually, a single satellite has a very wide coverage area, and the coverage area may reach thousands or even tens of thousands of kilometers. A single beam has a minimum coverage area of dozens or even thousands of meters. Therefore, to support wide-area coverage, hundreds or even thousands of beams usually need to be configured for the single satellite. This brings a great challenge to a payload of an LEO satellite. To alleviate a contradiction between a small payload and the wide coverage area of the single satellite, a beam hopping satellite communication system emerges. Specifically, in the beam hopping satellite communication system, only a few beams (for example, dozens of beams) are configured for the single satellite, and the beams serve all coverage areas of the single satellite in a time division manner.

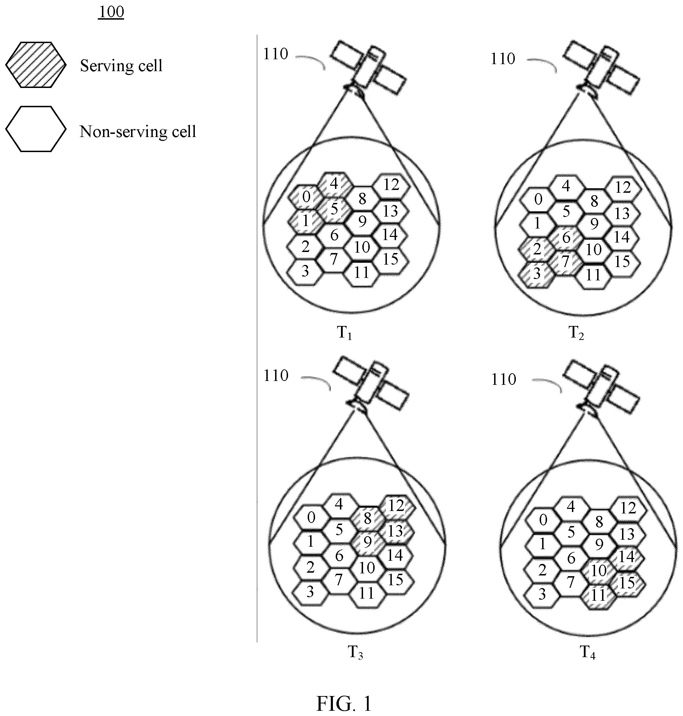

FIG. 1 is a schematic diagram of a beam hopping satellite communication system 100. As shown in FIG. 1, the beam hopping satellite communication system 100 includes a satellite 110 at a moment T₁, a moment T₂, a moment T₃, and a moment T₄. Because a location of the satellite 110 is different at different moments, the satellite 110 may form beams in different directions at different moments. In this embodiment of this application, the beams that can be formed by the satellite 110 are numbered, and beam numbers are 0 to 15. At the same time, the satellite 110 may form four beams. At the moment T₁, the satellite 110 uses four beams numbered 0, 1, 4, and 5 to cover their corresponding areas. At the moment T₂, the satellite 110 uses four beams numbered 2, 3, 6, and 7 to cover their corresponding areas. At the moment T₃, the satellite 110 uses four beams numbered 8, 9, 12, and 13 to cover their corresponding areas. At the moment T₄, the satellite 110 uses four beams numbered 10, 11, 14, and 15 to cover their corresponding areas. In this way, all areas (namely, areas corresponding to 16 beams) covered by a single satellite can be served in a time-division manner of T₁, T₂, T₃, T₄.

### 3. Elevation angle of a satellite

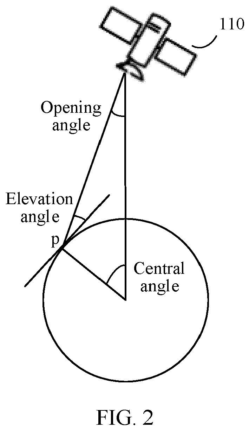

FIG. 2 is a schematic diagram of an elevation angle of a satellite according to an embodiment of this application. The satellite 110 in FIG. 1 is used as an example. As shown in FIG. 2, at a given moment, an included angle between a sight line of a point p on the earth to the satellite and a horizon of the point p is an elevation angle of the satellite 110.

It should be understood that a definition of the elevation angle is applicable to an elevation angle for a departure service, an elevation angle for an arrival service of the satellite, and an elevation angle of a terminal device relative to the satellite. However, points p corresponding to the three may be different. Therefore, the elevation angle for the departure service, the elevation angle for the arrival service of the satellite, and the elevation angle of the terminal device relative to the satellite may be different.

Usually, the elevation angle of the satellite is for describing a location at which the satellite passes over the terminal device at a specific moment. When the elevation angle is 90 degrees, it indicates that the satellite is right above the terminal device. At this time, the satellite does not provide a service for the terminal device. For example, a parameter that determines an elevation angle of the satellite at a specific moment may include latitude and longitude of a location of the terminal device, a height of the satellite from the earth, an orbit angle of the satellite, and a specific location (for example, latitude and longitude of the satellite) of the satellite in an orbit. It should be noted that the elevation angle may alternatively be obtained through transformation of angle information such as an opening angle and/or a central angle of the satellite.

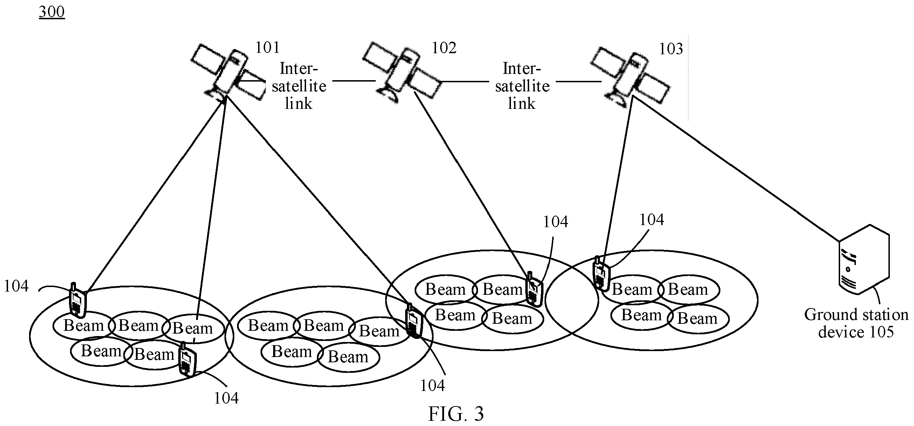

FIG. 3 is a schematic diagram of a satellite communication system 300 according to an embodiment of this application. The satellite communication system 300 includes a satellite 101, a satellite 102, a satellite 103, and at least one terminal device 104. Satellites communicate with each other through inter-satellite links. The satellite and the terminal device may communicate with each other by using an uplink and a downlink.

FIG. 3 shows an example of a scenario in which there are five terminal devices. A quantity of terminal devices is not limited in this embodiment of this application.

Optionally, the satellite communication system 300 further includes a ground station device 105. In a possible implementation, the satellite 103 may be connected to the ground station device 105, to communicate with the ground station device 105.

It should be understood that the satellite 101, the satellite 102, and the satellite 103 in FIG. 3 may have a same function as the satellite 110 in FIG. 1.

In this embodiment of this application, the terminal device may be at a fixed location, or may be movable. A quantity of satellites and the quantity of terminal devices included in the satellite communication system 300 are not limited in this embodiment of this application.

For example, the satellite in the satellite communication system 300 may be an LEO satellite, a non-geostationary earth orbit (non-geostationary earth orbit, NGEO) satellite, a middle earth orbit (middle earth orbit, MEO) satellite, or a geostationary earth orbit (geostationary earth orbit, GEO) satellite.

The satellite in the satellite communication system 300 may provide a communication service, a navigation service, a positioning service, and the like for the terminal device by using a plurality of beams. The satellite in the satellite communication system 300 covers a serving cell by using the plurality of beams, and different beams may perform communication through one or more of time division, frequency division, and space division. The satellite in the satellite communication system 300 performs wireless communication with the terminal device by using a broadcast communication signal, a navigation signal, and the like, and the satellite may perform the wireless communication with the ground station device. The satellite mentioned in this embodiment of this application may be a satellite base station, or may include an orbit receiver or a repeater configured to relay information, or may be a network device carried on a satellite.

Usually, a satellite communication system includes a transparent transmission satellite architecture and a non-transparent transmission satellite architecture. Transparent transmission is also referred to as bend-pipe forwarding transmission. To be specific, only processes such as frequency conversion and signal amplification of a signal are performed on the satellite, in other words, the satellite is transparent to a signal. Non-transparent transmission is also referred to as regeneration (being accessed/processed on the satellite) transmission, in other words, the satellite has a part of or all of base station functions. For example, the satellite 101 and the satellite 102 in FIG. 3 are the non-transparent transmission satellite architectures, and the satellite 103 is the transparent transmission satellite architecture.

The terminal device in this embodiment of this application may be referred to as user equipment, an access terminal, a subscriber unit, a subscriber station, a mobile station, a remote station, a remote terminal, a mobile device, a user terminal, a wireless communication device, a user agent, or a user apparatus. The terminal device in this embodiment of this application may alternatively be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, personal digital assistant (personal digital assistant, PDA), a handheld device having a wireless communication function, a computing device or another processing device connected to a wireless modem, a vehicle-mounted device or wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

In addition, the terminal device may alternatively be a terminal device in an internet of things (internet of things, IoT) system. The IoT is an important component of future information technology development. A main technical feature of the IoT is to connect things to a network by using a communication technology, to implement a smart network for human-machine interconnection and thing-thing interconnection. A specific form of the terminal device is not limited in this application.

It should be understood that in this embodiment of this application, the terminal device may be an apparatus configured to implement a function of the terminal device, or may be an apparatus, for example, a chip system, that can support the terminal device in implementing the function. The apparatus may be installed in a terminal. In this embodiment of this application, the chip system may include a chip, or may include a chip and another discrete component.

A network device in this embodiment of this application may include one or more satellites and ground station devices. The network device may be any device having a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, or may be a gNB in 5G such as an NR system, a transmission point (TRP or TP), one or a group (including a plurality of antenna panels) of antenna panels of a base station in a 5G system, or may be a network node, such as a baseband unit (BBU) or a distributed unit (distributed unit, DU), that constitutes a gNB or a transmission point.

It should be understood that in this embodiment of this application, the network device may be an apparatus configured to implement a function of the network device, or may be an apparatus, for example, a chip system that can support the network device in implementing the function. The apparatus may be installed in the network device.

It should be further understood that the network device and the terminal device in this embodiment of this application may be deployed on land, including an indoor or outdoor device, a handheld device, or a vehicle-mounted device, may be deployed on water, or may be deployed on an airplane, a balloon, or a satellite in air. An application scenario of the network device and the terminal device is not limited in this embodiment of this application.

The ground station device in this embodiment of this application may also be referred to as a core network device. For example, the ground station device is a device in a core network (core network, CN) in an existing mobile communication architecture or a device in a core network in a future mobile communication architecture. As a bearer network, the core network provides an interface to a data network, provides communication connection, authentication, management, and policy control for the terminal device, data traffic bearer, and the like. The CN may further include network elements such as an access and mobility management (access and mobility management function, AMF) network element, a session management (session management function, SMF) network element, an authentication server (authentication server function, AUSF) network element, a policy control (policy control function, PCF) network element, and a user plane function (user plane function, UPF) network element. The AMF network element is configured to manage access and mobility of the terminal device, and is mainly responsible for functions such as authentication of the terminal device, mobility management of the terminal device, and paging of the terminal device.

A satellite communication method provided in embodiments of this application may be applied to an NTN system such as a satellite communication system, a high-altitude platform (high-altitude platform station, HAPS) communication system, or an uncrewed aerial vehicle, for example, an integrated communication and navigation (integrated communication and navigation, IcaN) system, a global navigation satellite system (global navigation satellite system, GNSS), and an ultra-dense LEO satellite communication system. The satellite communication system can be integrated with a conventional mobile communication system. For example, the conventional mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), and a future mobile communication system.

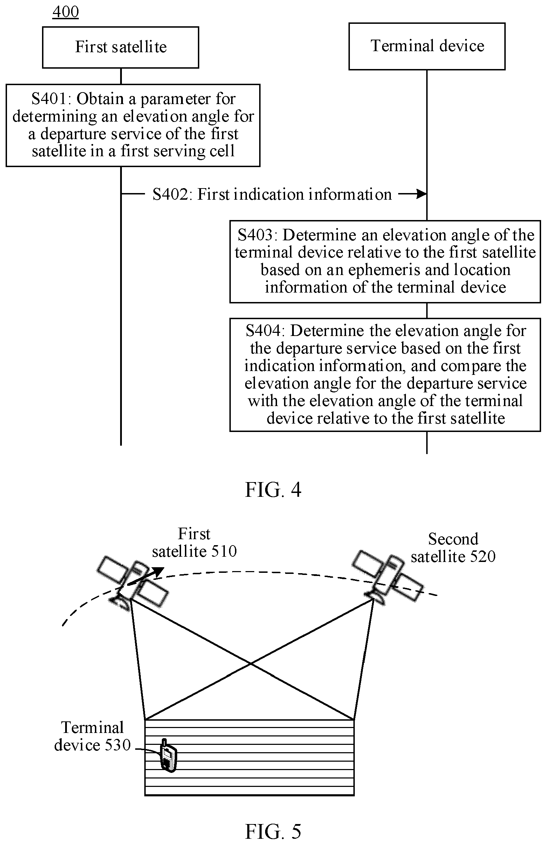

FIG. 4 is a schematic flowchart of a satellite communication method 400 according to an embodiment of this application. The method 400 may be applied to the satellite communication system 300, and a first satellite may be a satellite in the satellite communication system 300. However, this is not limited in this embodiment of this application. The method 400 includes the following steps.

S401: The first satellite obtains a parameter for determining an elevation angle for a departure service of the first satellite in a first serving cell.

S402: The first satellite sends first indication information to a terminal device, where the first indication information indicates the elevation angle for the departure service of the first satellite in the first serving cell in which the terminal device is located. Correspondingly, the terminal device receives the first indication information.

S403: The terminal device determines an elevation angle of the terminal device relative to the first satellite based on an ephemeris and location information of the terminal device.

S404: The terminal device determines departure service information based on the first indication information, and compares the elevation angle for the departure service with the elevation angle of the terminal device relative to the first satellite, to determine whether to perform satellite reselection or handover.

In this embodiment of this application, the first serving cell is one of a plurality of serving cells of the first satellite, and there is at least one terminal device in the first serving cell.

Optionally, the parameter for determining the elevation angle for the departure service of the first satellite in the first serving cell in which the terminal device is located includes at least one of the following: the elevation angle for the departure service, an opening angle, or a central angle of the first satellite. The parameter that indicates the elevation angle for the departure service of the first satellite in the first serving cell in which the terminal device is located may be the elevation angle for the departure service. In other words, the first satellite directly indicates the elevation angle for the departure service in the first serving cell to the terminal device. In addition, the parameter that indicates the elevation angle for the departure service of the first satellite in the first serving cell in which the terminal device is located may alternatively be the opening angle and/or the central angle of the first satellite. The terminal device may calculate the elevation angle for the departure service based on the opening angle and/or the central angle of the first satellite. In other words, the first satellite may indirectly indicate the elevation angle for the departure service in the first serving cell to the terminal device.

The elevation angle, the opening angle, and the central angle of the satellite are shown in FIG. 2. For example, when the opening angle and the central angle of the satellite are known, the elevation angle of the satellite may be calculated based on a triangle-related mathematical calculation manner.

In the satellite communication method in this embodiment of this application, the first satellite may indicate one elevation angle for a departure service by using the first indication information. The elevation angle for the departure service is used by the terminal device to determine whether to perform the satellite reselection or handover. The elevation angle for the departure service is applicable to all terminal devices in the first serving cell. In other words, a cell-specific (cell-specific) or satellite-specific (satellite-specific) elevation angle for a departure service may be implemented. In this way, the first satellite does not need to separately send a timer parameter to each terminal device in the first serving cell, to indicate the terminal device to perform the satellite reselection or handover. This helps reduce signaling overheads.

In an optional embodiment, S404 includes: When the elevation angle of the terminal device relative to the first satellite is less than or equal to the elevation angle for the departure service, the terminal device determines to perform the satellite reselection or handover.

In this embodiment of this application, the terminal device may compare the elevation angle of the terminal device calculated based on the ephemeris and the location information (for example, latitude and longitude) of the terminal device with the elevation angle for the departure service. When the elevation angle of the terminal device is less than or equal to the elevation angle for the departure service, the terminal device may trigger measurement related to the satellite reselection or handover, or directly trigger the satellite reselection or handover.

For example, when the terminal device is in a connected state, the terminal device may trigger the satellite handover. When the terminal device is in an idle state, the terminal device may trigger the satellite reselection.

FIG. 5 is a schematic diagram of satellite handover based on an elevation angle according to an embodiment of this application. FIG. 5 includes a first satellite 510, a second satellite 520, and a terminal device 530. The terminal device 530 is located in an overlapping area between a first serving cell of the first satellite 510 and a second serving cell of the second satellite 520, and the first satellite 510 moves in a direction indicated by an arrow.

It should be understood that the first satellite 510 and the second satellite 530 may be satellites in the satellite communication system 300, and the terminal device 530 may be a terminal device in the satellite communication system 300. However, this is not limited in this embodiment of this application.

After receiving an elevation angle for a departure service sent by the first satellite 510, the terminal device 530 calculates an elevation angle of the terminal device 530 relative to the first satellite. When the elevation angle of the terminal device 530 relative to the first satellite is less than or equal to the elevation angle for the departure service of the first satellite 510, in a possible implementation, the terminal device 530 may separately measure signal power between the terminal device 530 and at least one candidate satellite. A satellite that meets a signal power requirement is selected as a serving satellite that the terminal device 530 reselects or to which the terminal device 530 hands over. This helps improve communication quality. In another possible implementation, the terminal device 530 does not need to perform related measurement, and randomly selects a satellite from at least one candidate satellite as a serving satellite obtained through reselection or handover. This helps reduce a communication delay.

The terminal device 530 is located in a serving cell of the at least one candidate satellite. It is assumed that the terminal device is in a connected state. Whether the terminal device 530 chooses to directly hand over from the first satellite 510 to the second satellite 520 or chooses to hand over from the first satellite 510 to the second satellite 520 after measuring the signal power depends on early network deployment. Measurement related to the satellite reselection or handover is triggered based on a requirement during the network deployment, or the satellite reselection or handover is directly triggered.

For example, when a plurality of satellites meet the signal power requirement, a satellite having highest signal power may be selected as the serving satellite that the terminal device 530 reselects or to which the terminal device 530 hands over.

It should be understood that the second satellite 520 herein is one of the at least one candidate satellite, and is the serving satellite that the terminal device 530 reselects or to which the terminal device 530 hands over. Another candidate satellite is not shown in FIG. 5.

In an optional embodiment, the first indication information may be carried in a system information block SIB, a media access control control element MAC CE, downlink control information DCI, or radio resource control RRC.

For example, a range of the elevation angle for the departure service of the first satellite is 10 degrees to 85 degrees, indication precision of the first indication information is 5 degrees, and the elevation angle for the departure service of the first satellite may be indicated by using four bits. A correspondence between an information bit and an elevation angle for a departure service is shown in Table 1.

**Table 1**

| Information bit | Elevation angle for a departure service |
|---|---|
| 0000 | 10 |
| 0001 | 15 |
| 0010 | 20 |
| 0011 | 25 |
| 0100 | 30 |
| 0101 | 35 |
| 0110 | 40 |
| 0111 | 45 |
| 1000 | 50 |
| 1001 | 55 |
| 1010 | 60 |
| 1011 | 65 |
| 1100 | 70 |
| 1101 | 75 |
| 1110 | 80 |
| 1111 | 85 |

For example, an elevation angle for a departure service at a finer granularity may be indicated by using more bits. For example, when the range of the elevation angle for the departure service of the first satellite is 0 degrees to 90 degrees, and the indication precision of the first indication information is 2 degrees, the elevation angle for the departure service of the first satellite may be indicated by using six bits, or the elevation angle for the departure service of the first satellite may be indicated by using more bits. It should be noted that the elevation angle for the departure service herein may alternatively be obtained through transformation of angle information such as an opening angle and/or a central angle of the satellite. Therefore, cell reselection/handover may alternatively be achieved by indicating the angle information such as the opening angle and/or the central angle of the satellite.

In a satellite communication system, a plurality of satellites may coordinately cover a specific area. To implement coordinated coverage by the plurality of satellites, information about an elevation angle for an arrival service and an elevation angle for a departure service needs to be transferred between satellites/beams, to implement conversion of the coordinated coverage by the plurality of satellites and a service mode between the plurality of satellites.

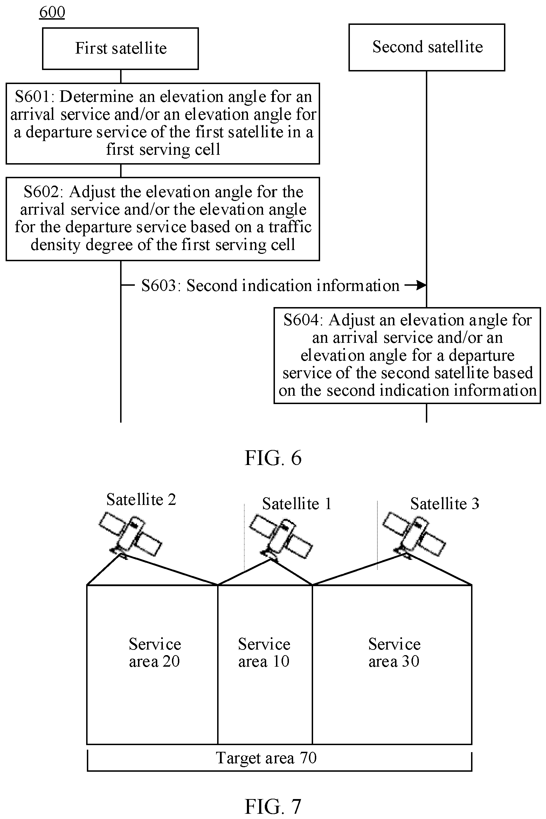

FIG. 6 is a schematic flowchart of another satellite communication method 600 according to an embodiment of this application. The method 600 may be applied to the satellite communication system 300. A first satellite and a second satellite may be satellites in the satellite communication system 300. However, this is not limited in this embodiment of this application. The method 600 includes the following steps.

S601: The first satellite determines an elevation angle for an arrival service of the first satellite in a first serving cell.

S602: The first satellite adjusts the elevation angle for the arrival service and/or an elevation angle for a departure service based on a traffic density degree of the first serving cell.

S603: The first satellite sends second indication information to the second satellite, where the second indication information indicates an adjusted elevation angle for the arrival service and/or an adjusted elevation angle for the departure service of the first satellite, and a coverage area of the first satellite is adjacent to a coverage area of the second satellite. Correspondingly, the second satellite receives the second indication information.

S604: The second satellite adjusts an elevation angle for an arrival service and/or an elevation angle for a departure service of the second satellite based on the second indication information.

In this embodiment of this application, there is at least one second satellite. The first satellite adjusts the elevation angle for the arrival service and/or the elevation angle for the departure service based on the traffic density degree of the first serving cell, and transfers the adjusted elevation angle for the arrival service and/or the adjusted elevation angle for the departure service to the second satellite. The second satellite may adaptively adjust the elevation angle for the arrival service and/or the elevation angle for the departure service of the second satellite based on the adjusted elevation angle for the arrival service and/or the adjusted elevation angle for the departure service of the first satellite, to implement coordinated coverage by a plurality of satellites. In this way, a manner of interacting the adjusted elevation angle for the arrival service and/or the adjusted elevation angle for the departure service helps the plurality of satellites dynamically adjust a service area, to implement seamless coverage of a target area. An elevation angle for an arrival service and/or an elevation angle for a departure service may be transferred between different satellites/cells served by different satellites through an Xn interface or an NG interface.

Optionally, when the traffic density degree of the first serving cell is greater than or equal to a first preset threshold, the first satellite may increase the elevation angle for the arrival service and/or the elevation angle for the departure service of the first satellite. In this way, a service area of the first satellite can be narrowed, to help improve a throughput in per unit of service area.

Optionally, when the traffic density degree of the first serving cell is less than or equal to a first preset threshold, the first satellite may decrease the elevation angle for the arrival service and/or the elevation angle for the departure service of the first satellite, to narrow a service area. In this way, the service area of the first satellite may be increased, to provide a communication service for more terminal devices.

Optionally, the elevation angle for the arrival service and the elevation angle for the departure service herein may alternatively be obtained through transformation of angle information such as an opening angle and/or a central angle of the satellite. Therefore, the coordinated coverage may alternatively be implemented between cells by indicating the angle information such as the opening angle and/or the central angle of the satellite. For example, the first satellite is a satellite 1, the second satellite includes a satellite 2 and a satellite 3, and the satellite 2 and the satellite 3 are neighboring satellites of the satellite 1. It may be understood as that coverage areas of the satellite 2 and the satellite 3 are adjacent to or overlap a coverage area of the satellite 1. It is assumed that at a moment T₀, elevation angles for arrival services and elevation angles for departure services of the satellite 1, the satellite 2, and the satellite 3 are shown in Table 2. At a moment T₁, because traffic of a serving cell of the satellite 1 is dense, the satellite 1 may increase an elevation angle for an arrival service and/or an elevation angle for a departure service of the satellite 1, to narrow a service area of the satellite 1 and enter a throughput-enhanced service mode. For example, the satellite 1 adjusts the elevation angle for the arrival service and the elevation angle for the departure service. Elevation angles for arrival services and elevation angles for departure services of the satellite 1, the satellite 2, and the satellite 3 at the moment T₁ are shown in Table 3.

**Table 2**

| Satellite identifier | Elevation angle for an arrival service | Elevation angle for a departure service |
|---|---|---|
| Satellite 1 | 35 | 25 |
| Satellite 2 | 30 | 45 |
| Satellite 3 | 35 | 25 |

**Table 3**

| Satellite identifier | Elevation angle for an arrival service | Elevation angle for a departure service |
|---|---|---|
| Satellite 1 | 60 | 55 |
| Satellite 2 | 30 | 45 |
| Satellite 3 | 35 | 25 |

It can be seen from Table 2 and Table 3, the elevation angle for the arrival service and the elevation angle for the departure service of the satellite 1 increase, the elevation angle for the arrival service of the satellite 1 is greater than elevation angles for arrival services of the satellite 2 and the satellite 3, and the elevation angle for the departure service of the satellite 1 is greater than the elevation angles for the arrival services of the satellite 2 and the satellite 3. Therefore, the service area of the satellite 1 is narrowed, and the service area of the satellite 1 is less than service areas of the satellite 2 and the satellite 3. Correspondingly, service areas of the satellite 1, the satellite 2, and the satellite 3 at the moment T₁ are shown in FIG. 7.

FIG. 7 is a schematic diagram of coordinated coverage by a plurality of satellites according to an embodiment of this application. It can be learned from FIG. 7 that the satellite 1, the satellite 2, and the satellite 3 coordinately cover a target area 70, and a service area 10 of the satellite 1 is less than a service area 20 of the satellite 2 and a service area 30 of the satellite 3.

It should be understood that the satellite 1, the satellite 2, and the satellite 3 in FIG. 7 may be satellites in the satellite communication system 300. However, this is not limited in this embodiment of this application.

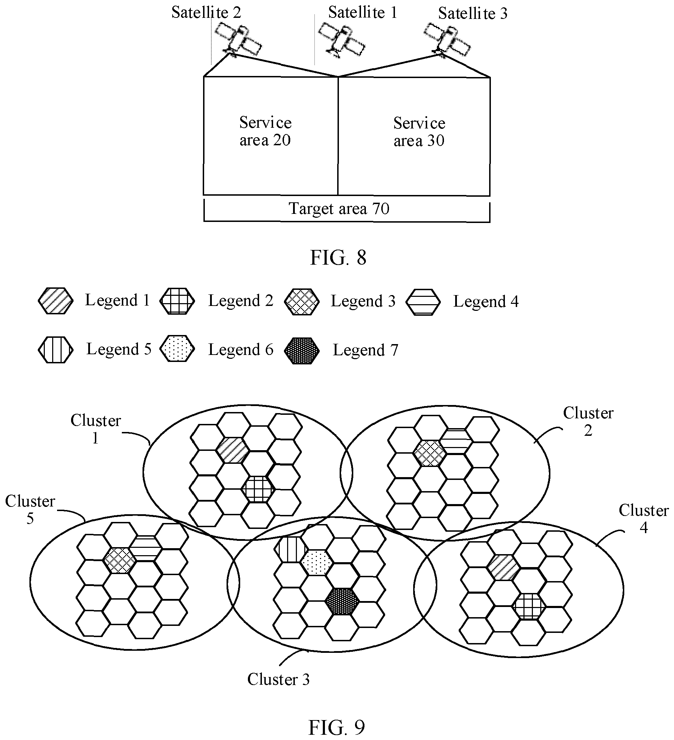

At a moment T₂, it is assumed that the service area of the satellite 1 is a high-latitude area. The satellite 1 may increase the elevation angle for the arrival service and/or the elevation angle for the departure service of the satellite 1 to 90 degrees. In other words, the satellite 1 does not provide a service for a terminal device at all, and enters an energy saving mode. To ensure seamless coverage of the target area, the satellite 2 and the satellite 3 may decrease elevation angles for arrival services and/or elevation angles for departure services of the satellite 2 and the satellite 3 to increase coverage areas. Elevation angles for arrival services and elevation angles for departure services of the satellite 1, the satellite 2, and the satellite 3 at the moment T₂ are shown in Table 4. Correspondingly, service areas of the satellite 1, the satellite 2, and the satellite 3 at the moment T₂ are shown in FIG. 8.

**Table 4**

| Satellite identifier | Elevation angle for an arrival service | Elevation angle for a departure service |
|---|---|---|
| Satellite 1 | 90 | 90 |
| Satellite 2 | 15 | 15 |
| Satellite 3 | 10 | 15 |

FIG. 8 is another schematic diagram of coordinated coverage by a plurality of satellites according to an embodiment of this application. It can be learned from FIG. 8 that the satellite 2 and the satellite 3 coordinately cover the target area 70. Because the elevation angle for the arrival service and the elevation angle for the departure service are increased to 90 degrees, the satellite 1 enters an energy saving mode and cannot continue to provide a service for a terminal device. In comparison with FIG. 7, in FIG. 8, after the satellite 2 and the satellite 3 decrease the elevation angles for the arrival services and the elevation angles for the departure services, the service area 20 of the satellite 2 and the service area 30 of the satellite 3 is increased.

It should be understood that the satellite 1, the satellite 2, and the satellite 3 in FIG. 8 may be satellites in the satellite communication system 300. However, this is not limited in this embodiment of this application.

Optionally, if the satellite 1 decreases the elevation angle for the arrival service and/or the elevation angle for the departure service of the satellite 1 to increase the service area of the satellite 1, the satellite 2 may adaptively increase an elevation angle for an arrival service and/or an elevation angle for a departure service of the satellite 2 to narrow the service area of the satellite 2. Similarly, the satellite 3 may also adaptively increase an elevation angle for an arrival service and/or an elevation angle for a departure service of the satellite 3 to narrow the service area of the satellite 3. This helps reduce power consumption of the satellite 2 or the satellite 3.

In an optional embodiment, the first satellite sends the second indication information to the terminal device, where the second indication information indicates the adjusted elevation angle for the arrival service and/or the adjusted elevation angle for the departure service. Correspondingly, the terminal device receives the second indication information, and determines, based on the adjusted elevation angle for the arrival service and/or the adjusted elevation angle for the departure service, whether to perform satellite reselection or handover.

In this embodiment of this application, that the first satellite is the satellite 1 in FIG. 7 is used as an example. Because the elevation angle for the arrival service and/or the elevation angle for the departure service of the satellite 1 are/is increased, and the service area 10 is narrowed, the satellite 1 may fail to continue to serve a terminal device in the service area 10. Therefore, the terminal device in the service area 10 may trigger the satellite reselection or handover, to improve communication quality and achieve efficient coordinated coverage by the plurality satellites.

When the plurality of satellites perform the coordinated coverage, signal interference may occur between systems including the plurality of satellites. For example, the first serving cell of the first satellite and a second serving cell of the second satellite use a same time-frequency resource. For the first serving cell, data transmission in the second serving cell may cause interference to data transmission in the first serving cell. Similarly, for the second serving cell, the data transmission in the first serving cell may cause interference to the data transmission in the second serving cell.

Currently, NR mainly resolves inter-cell interference problems in two dimensions: When deploying a serving cell, NR uses rules such as a mod 3 and a mod 30 to resolve problems of physical cell identifier (physical cell identifier, PCI) conflict and confusion. In addition, an interference coordination mechanism is set between serving cells, for example, an almost blank subframe (almost blank subframe, ABS), enhanced interference coordination, and a channel state information interference measurement (channel state information interference measurement, CSI-IM) feedback mechanism.

Because a space domain dimension is added to a beam hopping communication scenario, channel activation statuses and service statuses in different serving cells are significantly different, and interference statuses are more complex. Therefore, a current NR interference management technology cannot be applied.

To implement interference management of a serving cell, an embodiment of this application provides a satellite communication method, to implement efficient interference management between the plurality of satellites by transferring an activation factor of a channel between different satellites/cells.

FIG. 9 is a schematic diagram of interference management according to an embodiment of this application. In FIG. 9, for example, an area coordinately covered by the first satellite and the second satellite may be divided into five clusters (clusters). A cluster 1 and a cluster 2 separately include a plurality of serving cells of the first satellite, and a cluster 3, a cluster 4, and a cluster 5 separately include a plurality of serving cells of the second satellite.

When a channel is configured for each serving cell, frequency/polarization reuse may be used between different clusters. For example, the cluster 1 and the cluster 4 reuse channels C₀ and C₁, and the cluster 2 and the cluster 5 reuse channels C₂ and C₃. In addition, uneven channel allocation is used between different clusters, and each channel corresponds to a frequency and/or polarization combination. For example, three channels are configured for the cluster 3, which are C₄, C₅ and C₆ separately. Bandwidths of seven channels C₀, C₁, C₂, C₃, C₄, C₅ and C₆ are different, to match traffic requirements of different serving cells. A legend 1 and a legend 2 represent serving cells configured with channels C₀ and C₁ in the cluster 1 and the cluster 4, and a legend 3 and a legend 4 represent serving cells configured with channels C₂ and C₃ in the cluster 2 and the cluster 5. A legend 5, a legend 6, and a legend 7 represent serving cells configured with channels C₄, C₅ and C₆ in the cluster 3.

Because a quantity of serving cells and a quantity of used beams in different clusters may be different, generated inter-cluster interference is complex. To perform inter-cluster interference management, the activity factor of the channel may be transferred between serving satellites in different clusters, and interference estimation is performed by using the activity factor of the channel.

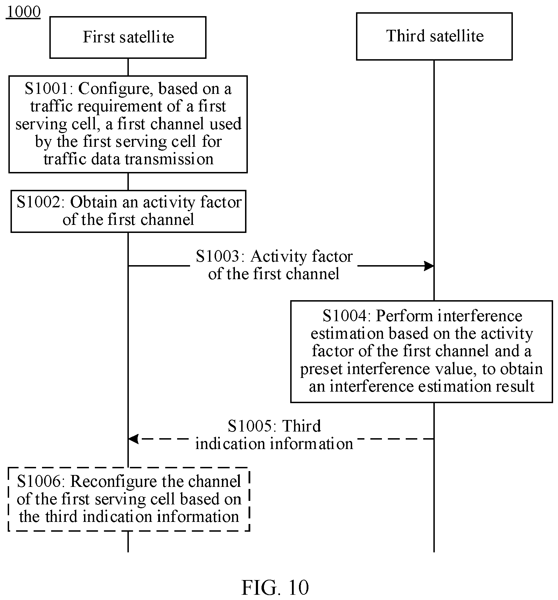

FIG. 10 is a schematic flowchart of still another satellite communication method 1000 according to an embodiment of this application. The method 1000 may be applied to the satellite communication system 300, and a first satellite and a third satellite may be satellites in the satellite communication system 300. However, this is not limited in this embodiment of this application. The method 1000 includes the following steps.

S1001: The first satellite configures, based on a traffic requirement of a first serving cell, a first channel used by the first serving cell for traffic data transmission.

With reference to FIG. 9, for example, the first serving cell may be one or more in the plurality of serving cells of the first satellite in the cluster 1. The first satellite selects, based on the bandwidths of the seven channels C₀, C₁, C₂, C₃, C₄, C₅ and C₆ and the traffic requirement of the first serving cell, a proper channel for the first serving cell to perform data transmission. For example, if traffic of the first serving cell is a broadband traffic, and a bandwidth of C₀ may meet a requirement of the broadband traffic, the first satellite may configure the channel C₀ for the first serving cell.

S1002: The first satellite obtains an activity factor of the first channel, where the activity factor represents average activation time of the channel in a target time period.

For example, if the target time period is T, time in which the channel C₀ is scheduled in the target time period is T₀, and α₀ represents an activity factor of the channel C₀, α₀ = T₀/T.

S1003: When the activity factor of the first channel is greater than or equal to a second preset threshold, the first satellite sends the activity factor of the first channel to a third satellite, where a coverage area of the third satellite is adjacent to a coverage area of the first satellite. Correspondingly, the third satellite receives the activity factor of the first channel.

The third satellite may be the second satellite in the foregoing embodiment, or may be another satellite different from the second satellite.

For example, an activity factor threshold of a channel in the cluster 1 is α_{T, 1} = 0.3. If α₀ = 0.4 > 0.3, the first satellite may send the channel C₀ and α₀ to the third satellite.

S1004: The third satellite performs interference estimation based on the activity factor of the first channel and a preset interference value, to obtain an interference estimation result. The interference estimation result represents interference caused by the first serving cell to a serving cell of the third satellite in a data transmission process.

After receiving the C₀ and α₀, the third satellite may perform the interference estimation based on α₀. For example, the interference estimation result I = α₀ x I₀, where I₀ represents the interference value preset by the system.

It should be understood that the third satellite in this embodiment of this application may be a satellite that reuses a same channel as the first satellite. The third satellite may directly interact interference information and negotiate an interference management policy with the first satellite by using an inter-satellite link, or the third satellite reports the interference estimation result to a central control node such as a gateway station or a core network device, and the control node receives channel information of another satellite for unified interference management.

Optionally, the method 1000 includes S1005: When the interference estimation result is greater than or equal to a third preset threshold, the third satellite sends third indication information to the first satellite, where the third indication information indicates the first satellite to reconfigure the channel. Correspondingly, the first device receives the third indication information.

For example, if the interference estimation result I is greater than or equal to the third preset threshold, the third satellite may indicate, by using the third indication information, the first satellite to reconfigure the channel.

Optionally, the third indication information carries an identifier of a channel, for example, carries an identifier of the channel C₂. After the channel of the first serving cell of the first satellite is refreshed, if the interference estimation result I is less than the third preset threshold, it indicates that current interference of the system falls within a preset range. In this case, the channel may not be refreshed anymore.

Optionally, the method 1000 includes S1006: The first satellite reconfigures the channel of the first serving cell based on the third indication information.

After reconfiguring the channel based on the third indication information, the first satellite may send reconfigured channel information to a terminal device, and the terminal device may select a channel based on location information of the terminal device for the data transmission.

In this embodiment of this application, the interference estimation may be performed between different satellites in a manner of transferring the activity factor of the channel, to determine whether the channel needs to be reconfigured to perform the interference management. Such an interference management manner is simple and efficient.

The foregoing describes the interference management of the plurality of satellites with reference to FIG. 9 and FIG. 10. If only the first satellite covers the area corresponding to the five clusters shown in FIG. 9, the first satellite may perform the interference estimation in a similar manner based on an activity factor of a channel in each cluster, to determine whether the channel needs to be reconfigured.

In an NR system, to enable the terminal device to learn of the location information of the terminal device, a synchronization signal block (synchronization signal block, SSB) index (index) may be usually used to identify a beam. A maximum value of an SSB index of a single cell is 64, in other words, the single cell includes a maximum of 64 SSB beams.

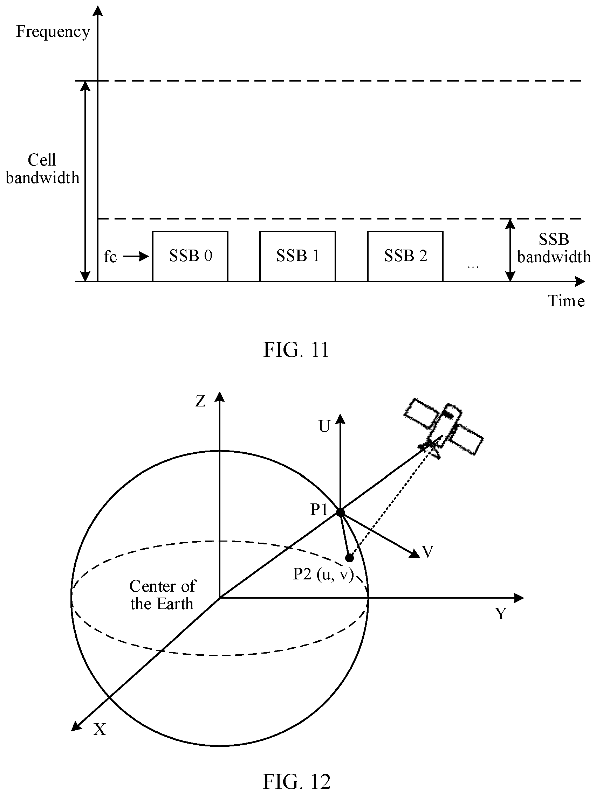

FIG. 11 is a schematic diagram of an intra-frequency SSB configuration of a single NR cell according to an embodiment of this application. As shown in FIG. 11, in the single cell, a beam may be identified in a same SSB bandwidth by using a plurality of SSB indexes such as an SSB 0, an SSB 1, and an SSB 2, and fc represents frequency of the SSB bandwidth. The SSB index is mainly determined by time domain, and is in one-to-one correspondence with a time domain location. In other words, different moments correspond to different SSB indexes.

However, in a scenario of an NTN with massive beams, because a coverage area of a signal satellite in the NTN is large, hundreds or even thousands of beams may be configured, and an existing NR beam indication method does not support such the scenario of massive beams. In addition, if an index indicating a beam is extended, large broadcast overheads are incurred.

To reduce the overheads, an embodiment of this application provides a beam indication method in the scenario of an NTN with massive beams. The method specifically includes the following three implementations.

Implementation 1: a UV center point and a radius indication. FIG. 12 is a schematic diagram of a UV plane according to an embodiment of this application. As shown in FIG. 12, the UV plane is defined as a plane perpendicular to a connection line between a satellite and a center of the Earth. P1 represents a radius point, P2 represents a center point of the UV plane, and may be denoted as (u, v). A length from P1 to P2 is a radius corresponding to the UV center point (u, v). Usually, coverage of a single satellite in the UV plane is a regular hexagon topology. Therefore, the satellite may indicate the UV center point and corresponding radius information to the terminal device to indicate a beam. For example, the UV center point is set to (0, 0) and the UV radius is set to 0.1.

When the satellite moves, the satellite may indicate a new UV center point after movement to the terminal device, and, a radius corresponding to the new UV center point may be calculated based on the new UV center point.

Implementation 2: a UV center point offset indication. When the satellite moves, the UV central point may shift. The satellite may indicate, to the terminal device, an offset (U-offset, V-offset) of a new UV center point relative to a baseline UV center point after the movement. For example, if the baseline UV center point is (1, 1) and the offset is (0.1, 0.03), the new UV center point after the movement is (1.1, 1.03).

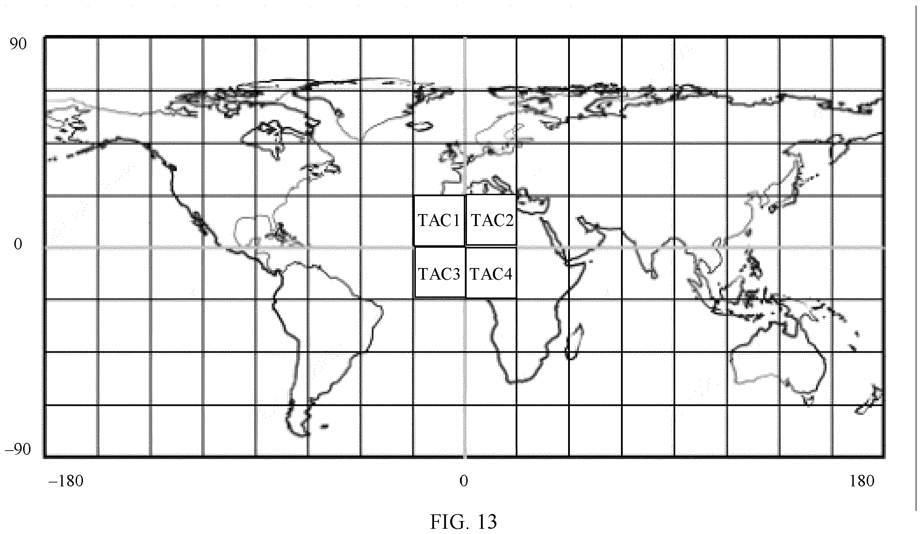

Implementation 3: Because tracking area code (tracking area code, TAC) implicitly includes the location information, to be specific, includes grid information about longitude and latitude, the satellite may indicate beam coverage information to the terminal device based on the TAC. FIG. 13 is a schematic diagram of a beam coverage location corresponding to the TAC according to an embodiment of this application. As shown in FIG. 13, the satellite may indicate a coverage area 1 of a beam based on TAC₁ and TAC₂, indicate a coverage area 2 of the beam based on the TAC₂ and TAC₃, and indicate a coverage area 3 of the beam based on TAC₄. In other words, the satellite may indicate a coverage area of the beam by using one or more TAC. In addition, the satellite may further use one piece of TAC to indicate coverage information of a plurality of beams in a single satellite/single cell.

After the satellite sends the beam coverage information to the terminal device, the terminal device may further perform random access (for example, select a channel resource for transmission), mobility management (for example, whether satellite/cell handover needs to be performed), or location management based on the location information of the terminal device.

It should be understood that sequence numbers of the foregoing processes do not mean execution sequences. The execution sequences of the processes need to be determined based on functions and internal logic of the processes, and should not be construed as any limitation on implementation processes of embodiments of this application.

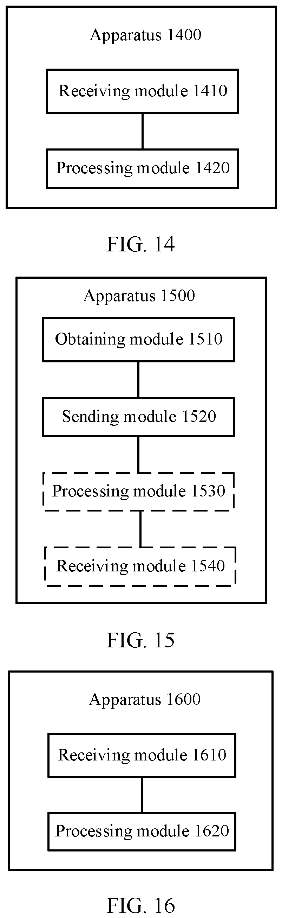

The foregoing describes in detail the satellite communication methods in embodiments of this application with reference to FIG. 1 to FIG. 13. The following describes in detail satellite communication apparatuses in embodiments of this application with reference to FIG. 14 to FIG. 18.

FIG. 14 is a schematic block diagram of a satellite communication apparatus 1400 according to an embodiment of this application. The apparatus 1400 includes a receiving module 1410 and a processing module 1420.

The receiving module 1410 is configured to receive first indication information from a first satellite, where the first indication information indicates a parameter for determining an elevation angle for a departure service of the first satellite in a first serving cell. The processing module 1420 is configured to determine an elevation angle of the apparatus relative to the first satellite based on an ephemeris and location information; and determine the elevation angle for the departure service based on the first indication information, and compare the elevation angle for the departure service with the elevation angle of the apparatus relative to the first satellite, to determine whether to perform satellite reselection or handover.

Optionally, the processing module 1420 is configured to: when the elevation angle of the apparatus relative to the first satellite is less than or equal to the elevation angle for the departure service, determine to perform the satellite reselection or handover.

Optionally, the first indication information is carried in any one of the following information: a SIB, a MAC CE, DCI, or RRC.

Optionally, the parameter for determining the elevation angle for the departure service of the first satellite in the first serving cell in which a terminal device is located includes at least one of the following: the elevation angle for the departure service, an opening angle, or a central angle of the first satellite.

In an optional example, a person skilled in the art may understand that the apparatus 1400 may be specifically the terminal device in the foregoing embodiments, or a function of the terminal device in the foregoing embodiments may be integrated into the apparatus 1400. The function may be implemented by hardware, or may be implemented by hardware executing corresponding software. The hardware or the software includes one or more modules corresponding to the function. For example, the foregoing receiving module 1410 may be a communication interface, for example, a transceiver interface. The apparatus 1400 may be configured to perform procedures and/or steps corresponding to the terminal device in the foregoing method embodiments.

FIG. 15 is a schematic block diagram of another satellite communication apparatus 1500 according to an embodiment of this application. The apparatus 1500 includes an obtaining module 1510 and a sending module 1520.

The obtaining module 1510 is configured to obtain a parameter for determining an elevation angle for a departure service of a first satellite in a first serving cell in which a terminal device is located. The sending module 1520 is configured to send first indication information to the terminal device in the first serving cell, where the first indication information indicates the parameter for determining the elevation angle for the departure service.

Optionally, the first indication information is carried in any one of the following information: a SIB, a MAC CE, DCI, or RRC.

Optionally, the parameter for determining the elevation angle for the departure service of the first satellite in the first serving cell in which the terminal device is located includes at least one of the following: the elevation angle for the departure service, an opening angle, or a central angle of the first satellite.

Optionally, the apparatus 1500 further includes a processing module 1530 that is configured to determine an elevation angle for an arrival service and/or the elevation angle for the departure service of the first satellite in the first serving cell; and adjust the elevation angle for the arrival service and/or the elevation angle for the departure service based on a traffic density degree of the first serving cell. The sending module 1520 is configured to send second indication information to a second satellite, where the second indication information indicates an adjusted elevation angle for the arrival service and/or an adjusted elevation angle for the departure service.

Optionally, the processing module 1530 is configured to: when the traffic density degree of the first serving cell is greater than or equal to a first preset threshold, increase the elevation angle for the arrival service and/or the elevation angle for the departure service; or when the traffic density degree of the first serving cell is less than a first preset threshold, decrease the elevation angle for the arrival service and/or the elevation angle for the departure service.

Optionally, the obtaining module 1510 is configured to obtain an activity factor of a first channel used by the first serving cell for traffic data transmission, where the activity factor represents average activation time of the channel in a target time period. The sending module 1520 is configured to: when the activity factor of the first channel is greater than or equal to a second preset threshold, send the activity factor of the first channel to a third satellite.

Optionally, the apparatus 1500 further includes a receiving module 1540 that is configured to receive third indication information from the third satellite, where the third indication information indicates to reconfigure the channel. The processing module 1530 is configured to reconfigure the channel of the first serving cell based on the third indication information.

In an optional example, a person skilled in the art may understand that the apparatus 1500 may be specifically the first satellite in the foregoing embodiments, or a function of the first satellite in the foregoing embodiments may be integrated into the apparatus 1500. The function may be implemented by hardware, or may be implemented by hardware executing corresponding software. The hardware or the software includes one or more modules corresponding to the function. For example, the foregoing sending module 1520 may be a communication interface, for example, a transceiver interface. The apparatus 1500 may be configured to perform procedures and/or steps corresponding to the first satellite in the foregoing method embodiments.

FIG. 16 is a schematic block diagram of still another satellite communication apparatus 1600 according to an embodiment of this application. The apparatus 1600 includes a receiving module 1610 and a processing module 1620.

The receiving module 1610 is configured to receive second indication information from a first satellite, where the second indication information indicates an adjusted elevation angle for an arrival service and/or an adjusted elevation angle for a departure service of the first satellite. The processing module 1620 is configured to adjust an elevation angle for an arrival service and/or an elevation angle for a departure service based on the adjusted elevation angle for the arrival service and/or the adjusted elevation angle for the departure service of the first satellite.

Optionally, the processing module 1620 is configured to: when the adjusted elevation angle for the arrival service and/or the adjusted elevation angle for the departure service of the first satellite are/is greater than or equal to an elevation angle for the arrival service and/or an elevation angle for the departure service of the first satellite before adjustment, decrease the elevation angle for the arrival service and/or the elevation angle for the departure service; or when the adjusted elevation angle for the arrival service and/or the adjusted elevation angle for the departure service of the first satellite are/is less than or equal to an elevation angle for an arrival service and/or an elevation angle for a departure service of the first satellite before adjustment, increase the elevation angle for the arrival service and/or the elevation angle for the departure service.

In an optional example, a person skilled in the art may understand that the apparatus 1600 may be specifically the second satellite in the foregoing embodiments, or a function of the second satellite in the foregoing embodiments may be integrated into the apparatus 1600. The function may be implemented by hardware, or may be implemented by hardware executing corresponding software. The hardware or the software includes one or more modules corresponding to the function. For example, the foregoing receiving module 1610 may be a communication interface, for example, a transceiver interface. The apparatus 1600 may be configured to perform procedures and/or steps corresponding to the second satellite in the foregoing method embodiments.

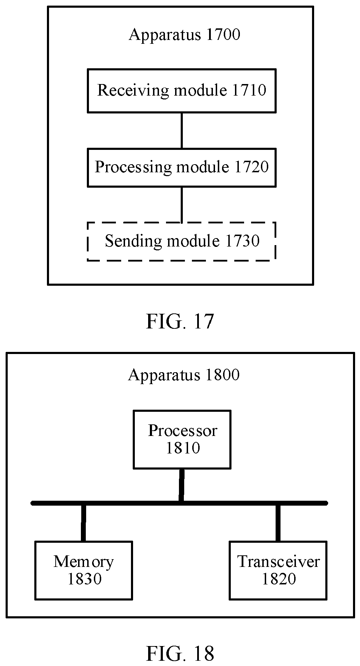

FIG. 17 is a schematic block diagram of yet another satellite communication apparatus 1700 according to an embodiment of this application. The apparatus 1700 includes a receiving module 1710 and a processing module 1720.

The receiving module 1710 is configured to receive an activity factor of a first channel from a first satellite, where the first channel is a first channel used by a first serving cell covered by the first satellite for traffic data transmission, and the activity factor represents average activation time of the channel in a target time period. The processing module 1720 is configured to perform interference estimation based on the activity factor of the first channel and a preset interference value, to obtain an interference estimation result, where the interference estimation result represents interference caused by the first serving cell in a data transmission process.

Optionally, the apparatus 1700 includes a sending module 1730 that is configured to: when the interference estimation result is greater than or equal to a third preset threshold, send third indication information to the first satellite, where the third indication information indicates the first satellite to reconfigure the channel.

In an optional example, a person skilled in the art may understand that the apparatus 1700 may be specifically the third satellite in the foregoing embodiments, or a function of the third satellite in the foregoing embodiments may be integrated into the apparatus 1700. The function may be implemented by hardware, or may be implemented by hardware executing corresponding software. The hardware or the software includes one or more modules corresponding to the function. For example, the foregoing receiving module 1710 may be a communication interface, for example, a transceiver interface. The apparatus 1700 may be configured to perform procedures and/or steps corresponding to the third satellite in the foregoing method embodiments.

It should be understood that the apparatus 1400, the apparatus 1500, the apparatus 1600, and the apparatus 1700 herein are embodied in a form of functional modules. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merge logic circuit, and/or another suitable component that supports the described function.

In embodiments of this application, the apparatus 1400, the apparatus 1500, the apparatus 1600, and the apparatus 1700 may alternatively be a chip or a chip system, for example, a system on chip (system on chip, SoC). Correspondingly, the receiving module and the sending module may be a transceiver circuit of the chip. This is not limited herein.

FIG. 18 is a schematic block diagram of still yet another satellite communication apparatus 1800 according to an embodiment of this application. The apparatus 1800 includes a processor 1810, a transceiver 1820, and a memory 1830. The processor 1810, the transceiver 1820, and the memory 1830 communicate with each other by using an internal connection path. The memory 1830 is configured to store instructions. The processor 1810 is configured to execute the instructions stored in the memory 1830, to control the transceiver 1820 to send a signal and/or receive a signal.

It should be understood that the apparatus 1800 may be specifically the terminal device, the first satellite, the second satellite, or the third satellite in the foregoing embodiments, or functions of the terminal device, the first satellite, the second satellite, or the third satellite in the foregoing embodiments may be integrated into the apparatus 1800. The apparatus 1800 may be configured to perform steps and/or procedures corresponding to the terminal device, the first satellite, the second satellite, or the third satellite in the foregoing method embodiments. Optionally, the memory 1830 may include a read-only memory and a random access memory, and provide instructions and data to the processor. A part of the memory may further include a non-volatile random access memory. For example, the memory may further store information about a device type. The processor 1810 may be configured to execute the instructions stored in the memory, and when the processor executes the instructions, the processor 1810 can perform the steps and/or the procedures corresponding to the terminal device, the first satellite, the second satellite, or the third satellite in the foregoing method embodiments.

It should be understood that in embodiments of this application, the processor may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the field, such as a random access memory, a flash memory, a read-only memory, a programmable read-only memory, an electrically erasable programmable memory, or a register. The storage medium is located in the memory, and the processor reads instructions in the memory and completes the steps in the foregoing methods in combination with hardware of the processor. To avoid repetition, details are not described herein again.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed systems, apparatuses, and methods may be implemented in another manner. For example, the apparatus embodiments described above are merely examples. For example, the module division is merely logical function division and there may be another division manner during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. A part of or all of the modules may be selected based on actual needs to achieve the objectives of the solutions of embodiments.

In addition, functional modules in this application may be integrated into one processing module, or each of the modules may exist alone physically, or two or more modules are integrated into one module.

When the functions are implemented in a form of a software functional module and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite communication method, comprising:
receiving, by a terminal device, first indication information from a first satellite, wherein the first indication information indicates a parameter for determining an elevation angle for a departure service of the first satellite in a first serving cell in which the terminal device is located;
determining, by the terminal device, an elevation angle of the terminal device relative to the first satellite based on an ephemeris and location information of the terminal device; and
determining, by the terminal device, the elevation angle for the departure service based on the first indication information, and comparing the elevation angle for the departure service with the elevation angle of the terminal device relative to the first satellite, to determine whether to perform satellite reselection or handover.

2. The method according to claim 1, wherein the comparing, by the terminal device, the elevation angle for the departure service with the elevation angle of the terminal device relative to the first satellite, to determine whether to perform satellite reselection or handover comprises:
when the elevation angle of the terminal device relative to the first satellite is less than or equal to the elevation angle for the departure service, determining, by the terminal device, to perform the satellite reselection or handover.

3. The method according to claim 1 or 2, wherein the first indication information is carried in any one of the following information:
a system information block SIB, a media access control control element MAC CE, downlink control information DCI, or radio resource control RRC.

4. The method according to any one of claims 1 to 3, wherein the parameter for determining the elevation angle for the departure service of the first satellite in the first serving cell in which the terminal device is located comprises at least one of the following:
the elevation angle for the departure service, an opening angle, or a central angle of the first satellite.

5. A satellite communication method, comprising:
obtaining, by a first satellite, a parameter for determining an elevation angle for a departure service of the first satellite in a first serving cell in which a terminal device is located; and
sending, by the first satellite, first indication information to the terminal device in the first serving cell, wherein the first indication information indicates the parameter for determining the elevation angle for the departure service.

6. The method according to claim 5, wherein the first indication information is carried in any one of the following information:
a system information block SIB, a media access control control element MAC CE, downlink control information DCI, or radio resource control RRC.

7. The method according to claim 5 or 6, wherein the parameter for determining the elevation angle for the departure service of the first satellite in the first serving cell in which the terminal device is located comprises at least one of the following:
the elevation angle for the departure service, an opening angle, or a central angle of the first satellite.

8. The method according to any one of claims 5 to 7, wherein the method further comprises:
determining, by the first satellite, an elevation angle for an arrival service and/or the elevation angle for the departure service of the first satellite in the first serving cell;
adjusting, by the first satellite, the elevation angle for the arrival service and/or the elevation angle for the departure service based on a traffic density degree of the first serving cell; and
sending, by the first satellite, second indication information to a second satellite, wherein the second indication information indicates an adjusted elevation angle for the arrival service and/or an adjusted elevation angle for the departure service of the first satellite, and a coverage area of the second satellite is adjacent to a coverage area of the first satellite.

9. The method according to claim 8, wherein the adjusting, by the first satellite, the elevation angle for the arrival service and/or the elevation angle for the departure service based on a traffic density degree of the first serving cell comprises:
when the traffic density degree of the first serving cell is greater than or equal to a first preset threshold, increasing, by the first satellite, the elevation angle for the arrival service and/or the elevation angle for the departure service; or
when the traffic density degree of the first serving cell is less than a first preset threshold, decreasing, by the first satellite, the elevation angle for the arrival service and/or the elevation angle for the departure service.

10. The method according to any one of claims 5 to 9, wherein the method further comprises:
obtaining, by the first satellite, an activity factor of a first channel used by the first serving cell for traffic data transmission, wherein the activity factor represents average activation time of the channel in a target time period; and
when the activity factor of the first channel is greater than or equal to a second preset threshold, sending, by the first satellite, the activity factor of the first channel to a third satellite, wherein a coverage area of the third satellite is adjacent to the coverage area of the first satellite.

11. The method according to claim 10, wherein the method further comprises:
receiving, by the first satellite, third indication information from the third satellite, wherein the third indication information indicates the first satellite to reconfigure the channel; and
reconfiguring, by the first satellite, the channel of the first serving cell based on the third indication information.

12. A satellite communication method, comprising:
receiving, by a second satellite, second indication information from a first satellite, wherein the second indication information indicates an adjusted elevation angle for an arrival service and/or an adjusted elevation angle for a departure service of the first satellite, and a coverage area of the second satellite is adjacent to a coverage area of the first satellite; and
adjusting, by the second satellite, an elevation angle for an arrival service and/or an elevation angle for a departure service of the second satellite based on the adjusted elevation angle for the arrival service and/or the adjusted elevation angle for the departure service of the first satellite.

13. The method according to claim 12, wherein the adjusting, by the second satellite, an elevation angle for an arrival service and/or an elevation angle for a departure service of the second satellite based on the adjusted elevation angle for the arrival service and/or the adjusted elevation angle for the departure service of the first satellite comprises:
when the adjusted elevation angle for the arrival service and/or the adjusted elevation angle for the departure service of the first satellite are/is greater than or equal to an elevation angle for the arrival service and/or an elevation angle for the departure service of the first satellite before adjustment, decreasing, by the second satellite, the elevation angle for the arrival service and/or the elevation angle for the departure service of the second satellite; or
when the adjusted elevation angle for the arrival service and/or the adjusted elevation angle for the departure service of the first satellite are/is less than or equal to an elevation angle for an arrival service and/or an elevation angle for a departure service of the first satellite before adjustment, increasing, by the second satellite, the elevation angle for the arrival service and/or the elevation angle for the departure service of the second satellite.

14. A satellite communication method, comprising:
receiving, by a third satellite, an activity factor of a first channel from a first satellite, wherein the first channel is a first channel used by a first serving cell covered by the first satellite for traffic data transmission, the activity factor represents average activation time of the channel in a target time period, and a coverage area of the third satellite is adjacent to a coverage area of the first satellite; and
performing, by the third satellite, interference estimation based on the activity factor of the first channel and a preset interference value, to obtain an interference estimation result, wherein the interference estimation result represents interference caused by the first serving cell to a serving cell of the third satellite in a data transmission process.

15. The method according to claim 14, wherein the method further comprises:
when the interference estimation result is greater than or equal to a third preset threshold, sending, by the third satellite, third indication information to the first satellite, wherein the third indication information indicates the first satellite to reconfigure the channel.

16. A satellite communication apparatus, comprising a module configured to perform the method according to any one of claims 1 to 4, a module configured to perform the method according to any one of claims 5 to 11, a module configured to perform the method according to claim 12 or 13, or a module configured to perform the method according to claim 14 or 15.

17. A satellite communication apparatus, comprising a processor and a memory, wherein the memory is configured to store one or more computer programs; and when the one or more computer programs are run, the method according to any one of claims 1 to 4 is performed, the method according to any one of claims 5 to 11 is performed, the method according to claim 12 or 13 is performed, or the method according to claim 14 or 15 is performed.

18. A computer-readable storage medium, wherein the computer-readable storage medium is configured to store a computer program; and when the computer program is run on a computer, the computer is enabled to perform the method according to any one of claims 1 to 4, the computer is enabled to perform the method according to any one of claims 5 to 11, the computer is enabled to perform the method according to claim 12 or 13, or the computer is enabled to perform the method according to claim 14 or 15.

19. A computer program product, wherein the computer program product comprises computer program code; and when the computer program code is run, the method according to any one of claims 1 to 4 is implemented, the method according to any one of claims 5 to 11 is implemented, the method according to claim 12 or 13 is implemented, or the method according to claim 14 or 15 is implemented.

20. A satellite communication system, comprising a terminal device and a satellite, wherein the terminal device is configured to perform the method according to any one of claims 1 to 4, and the satellite is configured to perform the method according to any one of claims 5 to 11, the satellite is configured to perform the method according to claim 12 or 13, or the satellite is configured to perform the method according to claim 14 or 15.
